# EUROPÄISCHE PATENTSCHRIFT

(11) **EP 3 698 749 B1**
(45) Veröffentlichungstag und Bekanntmachung des Hinweises auf die Patenterteilung: **15.09.2021**
(21) Anmeldenummer: 20150094.9
(22) Anmeldetag: 02.01.2020
(51) Int. Cl.: A61C 7/08, B29C 51/10

(54) **VORRICHTUNG ZUR HERSTELLUNG VON FÜR DENTALE ZWECKE BESTIMMTEN TEILE MITTELS TIEFZIEHEN**
DEVICE FOR PRODUCING PARTS INTENDED FOR DENTAL PURPOSES BY THERMOFORMING
DISPOSITIF DE FABRICATION DE PIÈCES DESTINÉES À DES FINS DENTAIRES PAR THERMOFORMAGE

(30) Priorität: 25.02.2019 DE 202019101071 U
(43) Veröffentlichungstag der Anmeldung: 26.08.2020
(73) Patentinhaber: Dreve Dentamid GmbH, 59423 Unna (DE)
(72) Erfinder: Dreve, Volker, 59423 Unna (DE)
(74) Vertreter: Köchling, Conrad-Joachim

(56) Entgegenhaltungen:
- US-A- 3 307 222
- US-A- 3 960 471
- US-A- 5 829 980
- US-A- 5 829 980
- US-A1- 2017 144 360

## Beschreibung

Die Erfindung betrifft eine Vorrichtung zur Herstellung von für dentale Zwecke bestimmten Teilen, insbesondere mundgetragenen Schienen für bezahnte Ober- oder Unterkiefer, mittels Tiefziehen, wobei ein Modell in die Vorrichtung eingelegt, auf das Modell eine Tiefziehfolie aufgelegt und mittels eines Vakuumerzeugers zu einer Schiene tiefgezogen wird, wobei die Vorrichtung eine Modellplatte aufweist, auf der mehrere Modellablageplätze ausgebildet sind, jeder Modellablageplatz unterseitig gegenüber dem Platz zur Anordnung eines Modells einen Anschluss an den Vakuumerzeuger aufweist, wobei oberhalb der Modellplatte eine Ablage für eine Tiefziehfolie angeordnet ist, die alle Modellablageplätze überdeckt und die vorzugsweise in eine Handhabungsposition mit Abstand von den Modellablageplätzen verstellbar ist sowie in eine Arbeitslage, in der sie auf die auf den Modellablageplätzen befindlichen Modelle absenkbar ist und die luftdicht mindestens am umlaufenden Rand der Modellplatte aufliegt.

Im Stand der Technik sind solche Vorrichtungen bekannt. In diesen Vorrichtungen werden jeweils einzelne für dentale Zwecke bestimmte Teile hergestellt. Dabei wird auf einem Modellplatz ein Modell platziert. Über dem Modell wird eine Tiefziehfolie positioniert, die in geeigneter Weise abgedichtet in die Vorrichtung eingebracht wird. Die Tiefziehfolie wird dann erwärmt und mittels eines Vakuumerzeugers auf das jeweilige Modell geformt, sodass es die Form des Modelles annimmt. Nach Abkühlen kann dann die Vorrichtung geöffnet werden und die ausgeformte Tiefziehfolie gegebenenfalls gemeinsam mit dem Modell entnommen werden.

Eine solche Vorrichtung ist zwar brauchbar und ist auch für viele Zwecke einsetzbar, jedoch besteht ein Bedarf dahin, solche durch Tiefziehen erzeugte Produkte in hoher Anzahl möglichst schnell fertigen zu können, was mit den üblichen bekannten Vorrichtungen nicht der Fall ist, da jeweils nur eine einzige entsprechende Formung einer mundgetragenen Schiene oder dergleichen möglich ist.

Aus der US 3 307 222 A ist eine gattungsgemäße Vorrichtung bekannt.

Ausgehend von diesem Stand der Technik liegt der Erfindung die Aufgabe zugrunde, den Herstellungsprozess für eine Vielzahl von solchen für dentale Zwecke bestimmten Teilen, insbesondere mundgetragenen Schienen, zeitlich zu verkürzen und somit die Herstellung von solchen Teilen schneller und auch kostengünstiger vornehmen zu können, wobei alle Saugstellen zeitgleich und gleichmäßig entlüftet werden sollten.

Zur Lösung dieser Aufgabe schlägt die Erfindung vor, dass der Anschluss über Verbindungskanäle oder -schlitze an der Oberseite des jeweiligen Modellablageplatzes offen ausmündet und, dass der Vakuumerzeuger mit den Verbindungskanälen oder - schlitzen über Schläuche verbunden ist, wobei alle Schläuche die gleiche Länge und den gleichen Querschnitt oder Durchmesser aufweisen.

Gemäß einer solchen Ausbildung ist die Vorrichtung nicht nur mit einem Modellablageplatz versehen, sondern mit einer Vielzahl von Modellablageplätzen, die auf der Modellplatte ausgebildet sind. Damit mit einer solchen Vorrichtung gleichzeitig mehrere für dentale Zwecke bestimmte Teile im Wege des Tiefziehens von Tiefziehfolien hergestellt werden können, ist jeder Modellablageplatz unterseitig gegenüber dem Platz der zur Anordnung eines Modelles dient, mit einem Anschluss an den Vakuumerzeuger ausgestattet, der wiederum über Verbindungskanäle oder Schlitze an der Oberseite des jeweiligen Modellablageplatzes offen ausmündet. Hierdurch ist es möglich, einerseits unterseitig den Vakuumerzeuger an alle Modellablageplätze anzuschließen und somit in jedem gewünschten Bereich ein Vakuum zu erzeugen. Andererseits wird über die Verbindungskanäle oder -schlitze an der Oberseite des jeweiligen Modellablageplatzes die notwendige Verbindung zwischen dem Vakuumerzeuger und dem Ablageplatz hergestellt.

Zudem ist oberhalb der Modellplatte eine Ablage für eine Tiefziehfolie angeordnet, die alle Modellablageplätze überdeckt. Es ist somit möglich, nur eine einzige Tiefziehfolie aufzubringen und zu platzieren, um nachfolgend dann den Tiefziehvorgang an allen Modellablageplätzen gleichzeitig vornehmen zu können. Um die Tiefziehfolie platzieren zu können, ist die Ablage für die Tiefziehfolie in eine Handhabungsposition verstellbar, in der sie Abstand von den Modellablageplätzen aufweist, sodass die Tiefziehfolie platziert werden kann, ohne dass durch die auf den Modellablageplätzen befindlichen Modelle ein Hindernis gebildet wird.

Des Weiteren ist die Ablage in eine Arbeitslage verstellbar, in der sie auf die auf den Modellablageplätzen befindlichen Modellen absenkbar ist und luftdicht zumindest am Rand umlaufend der Modellplatte aufliegt, um die Dichtigkeit beim Vakuumziehen zu realisieren. Durch diese Vorrichtung ist es somit in einfacher Weise möglich, eine Vielzahl von für dentale Zwecke bestimmten Teilen gleichzeitig durch Tiefziehen der Tiefziehfolie herzustellen. Der gesamte Zeitaufwand wird gegenüber der herkömmlichen Technik wesentlich verkürzt und somit die Produktpreise deutlich verringert.

Eine besondere Ausbildung wird darin gesehen, dass der Vakuumerzeuger mit den Verbindungskanälen oder -schlitzen über Schläuche verbunden ist, wobei alle Schläuche die gleiche Länge und den gleichen Querschnitt oder Durchmesser aufweisen.

Hierdurch wird erreicht, dass der Vakuumerzeuger in Form einer leistungsstarken Vakuumpumpe über entsprechende Schläuche mit den Verbindungskanälen oder Schlitzen verbunden ist, sodass alle Saugestellen zeitgleich und gleichmäßig entlüftet werden können, sofern das Vakuum mittels des Vakuumerzeugers aufgebaut wird.

Für die zeitgleiche Fertigung der entsprechenden Produkte in einem einzigen Arbeitsgang ist es äußerst hilfreich und notwendig, dass die einzelnen Saugstellen mit Zuführungen ausgestattet sind, die gleiche Länge und gleiche Durchmesser beziehungsweise Querschnitte aufweisen.

Eine des Weiteren bevorzugte Ausgestaltung wird darin gesehen, dass die Ablage für die Tiefziehfolie durch eine Folienkassette mit einem rahmenartigen Oberteil und einem rahmenartigen Unterteil gebildet ist, wobei das Oberteil relativ zum Unterteil in eine Handhabungsposition verstellbar ist, in der eine Tiefziehfolie zwängungsfrei zwischen Ober- und Unterteil einlegbar ist, des Weiteren in einer Zwischenposition die Tiefziehfolie zwischen Ober- und Unterteil eingespannt hält und in dieser Zwischenposition in ein Einschubteil der Kassette einschiebbar oder eingeschoben ist, in dem das Oberteil samt Tiefziehfolie und Unterteil in gespanntem Zustand in Arbeitslage gehalten ist.

Hierdurch wird eine besonders praktische Arbeitshilfe zur Verfügung gestellt. Die Folienkassette weist eine einfache aus der Vorrichtung entnehmbare Folienaufnahme auf, die durch das rahmenartige Oberteil und das rahmenartige Unterteil gebildet ist. Zur Bestückung und Entnahme der Tiefziehfolien kann dieses Teil entnommen werden und das Oberteil von dem Unterteil gelöst werden, sodass einerseits das Einlegen einer Tiefziehfolie möglich ist und andererseits nach Beendigung des Arbeitsprozesses das Entnehmen der umgeformten Tiefziehfolie gegebenenfalls samt Modellen ermöglicht ist.

Besonders bevorzugt ist hierbei vorgesehen, dass das Einschubteil der Folienkassette parallel zur Einschubrichtung des aus Oberteil, Tiefziehfolie und Unterteil bestehenden Paketes randseitig sich am Rand des Oberteils abstützende Druckverteilerleisten aufweist.

Hierdurch ist es möglich, dass die Folienkassette und insbesondere die Tiefziehfolie beim Einschieben in die Vorrichtung durch die Druckverteilerleisten so fixiert wird, dass die notwendige Spannung auch bei verschiedenen Materialstärken der Tiefziehfolie gewährleistet ist.

Bevorzugt kann hierzu vorgesehen sein, dass die Druckverteilerleisten quer zur Einschubrichtung federnd nachgiebig angeordnet sind.

Gemäß dieser Ausgestaltung kann natürlich auch die Folienkassette nicht nur mit der Tiefziehfolie in das Gerät eingeschoben werden, wobei die Tiefziehfolie einfach in der Folienkassette montiert werden kann, sondern es kann auch nach Ablauf des Tiefziehvorganges die Folienkassette gemeinsam mit der Tiefziehfolie und den daran befindlichen Modellen, die bei der Umformung haften geblieben sind, entnommen werden, sodass auch diesbezüglich die Arbeit erleichtert und beschleunigt wird.

In an sich bekannter Weise ist zudem vorgesehen, dass die Vorrichtung eine Wärmequelle zur Erwärmung der Tiefziehfolie aufweist, vorzugsweise jeweils eine Wärmequelle oberhalb eines jeden Modellablageplatzes.

Besonders bevorzugt ist zudem vorgesehen, dass die Modellablageplätze auf der Modellplatte in mehreren Reihen und Spalten ausgebildet sind.

Diese Anordnung ist besonders günstig bezüglich der entsprechenden Anschlussnotwendigkeiten, wobei beispielsweise drei Modellablageplätze in mehreren zueinander parallel gerichteten Reihen jeweils angeordnet werden können, die damit auch zum Beispiel drei Modellablageplätze in drei Spalten, voneinander gleich beabstandet, bilden.

Ein Ausführungsbeispiel der Erfindung ist in der Zeichnung dargestellt und im Folgenden näher beschrieben.

Es zeigt:
Fig. 1 eine erfindungswesentliche Einzelheit der Vorrichtung in Ansicht;
Fig. 2 eine weitere Einzelheit hierzu ebenfalls in Ansicht;
Fig. 3 eine weitere Einzelheit in explosionsartiger Darstellung.

Die in der Zeichnung dargestellten Einzelheiten sind Bestandteile einer Vorrichtung zur Herstellung für dentale Zwecke bestimmten Teilen, insbesondere mundgetragenen Schienen für bezahnte Ober- oder Unterkiefer, mittels Tiefziehen. Hierbei wird üblicherweise ein Modell in die Vorrichtung eingelegt und auf das Modell wird eine Tiefziehfolie aufgelegt. Diese Tiefziehfolie wird mittels eines Vakuumerzeugers zu einer Schiene tiefgezogen, wobei vorzugsweise die Tiefziehfolie erwärmt wird, um den Tiefziehvorgang zu vereinfachen und zu beschleunigen.

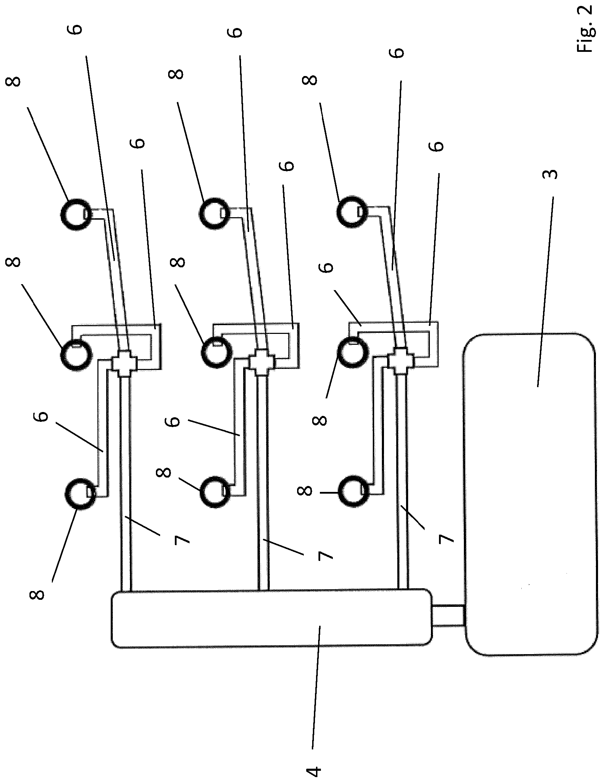

Die Vorrichtung weist eine Modellplatte 1 auf, auf der mehrere Modellablageplätze 2 ausgebildet sind. Jeder Modellablageplatz 2 weist unterseitig gegenüber diesem Platz, der zur Anordnung jeweils eines Modells dient, einen Anschluss an den Vakuumerzeuger 3 auf, der in Figur 2 gezeigt ist. Der Vakuumerzeuger 3 ist über ein Verbindungsteil 4 und weitere Elemente an die Modellablageplätze angeschlossen, wobei jeder Modellablageplatz Verbindungsschlitze 5 aufweist, die an der Oberseite offen ausmünden. Oberhalb der Modellplatte 1 ist eine Ablage für eine Tiefziehfolie angeordnet, die alle Modellablageplätze 2 überdeckt. Diese ist in eine Handhabungsposition einstellbar, in der sie Abstand von den Modellablageplätzen 2 aufweist, sowie in eine Arbeitslage, in der sie auf die auf den Modellablageplätzen 2 befindlichen Modelle absenkbar ist und luftdicht mindestens am umlaufenden Rand der Modellplatte 1 aufliegt. Insbesondere ist der Vakuumerzeuger 3 über das Element 4 und weitere Elemente mit den Verbindungskanälen beziehungsweise Schlitzen 5 verbunden. Die Verbindung ist über Schläuche 6 von einer Zufuhrleitung 7 ausgehend gebildet, wobei alle Schläuche 6 gleiche Länge und gleichen Querschnitt oder Durchmesser aufweisen. Hierdurch ist sichergestellt, dass bei Inbetriebnahme des Vakuumerzeugers 3 jede Anschlussstelle 8 in gleicher Weise und mit gleicher Leistung eine Saugkraft durch die Schlitze 5 der Modellablageplätze 2 auf die darüber befindliche Tiefziehfolie ausüben kann.

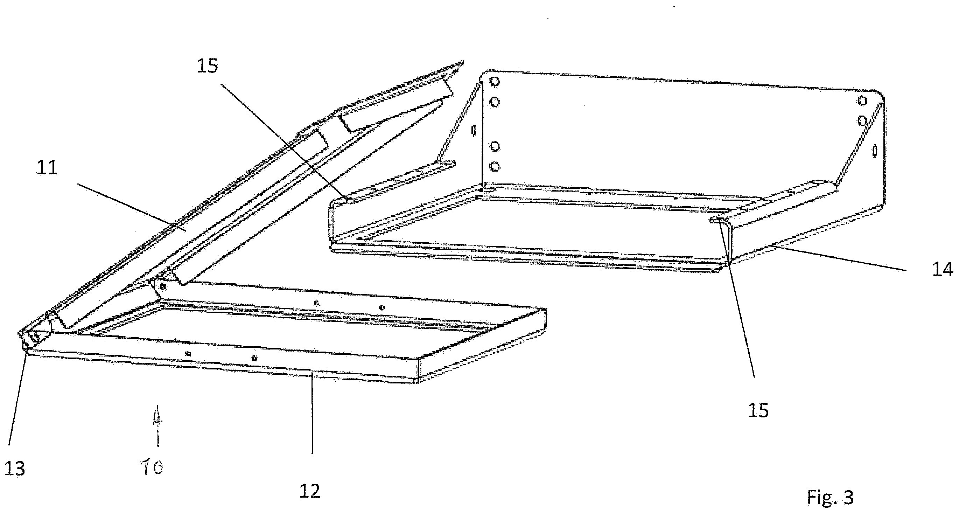

Die eigentliche Ablage für die Tiefziehfolie ist durch eine Folienkassette 10 gebildet, die ein rahmenartiges Oberteil 11 und ein rahmenartiges Unterteil 12 aufweist. Das Oberteil 11 ist relativ zum Unterteil 12 über eine Scharniergelenkverbindung 13 verbunden, sodass das Oberteil relativ zum Unterteil in eine Handhabungsposition verstellbar ist, die in Figur 3 gezeigt ist. In dieser Position kann eine Tiefziehfolie zwängungsfrei zwischen Oberteil und Unterteil 11,12 eingelegt werden. Anschließend kann das Oberteil 11 zum Unterteil 12 verschwenkt werden, sodass die Tiefziehfolie zwischen diesen Teilen eingespannt gehalten ist. Die Einspannung erfolgt an entsprechenden Randteilen beziehungsweisen Vorsprüngen des Oberteils und Unterteils 11,12.

In dieser sogenannten Zwischenposition kann die Folienkassette 10 in ein Einschubteil 14 der gesamten Kassettenkonstruktion eingeschoben werden, wozu das Einschubteil 14 einseitig eine Einschubführung aufweist und hinterseitig einen Anschlag, der die Einschubtiefe der Folienkassette 10 beschränkt.

In einer Arbeitslage ist das Oberteil 11 samt Tiefziehfolie und Unterteil 12 im gespannten Zustand in dem Einschubteil 14 gehalten. In der Einschublage ist das Einschubteil 14 der Folienkassette 10 an zwei Druckverteilerleisten 15 randseitig am Oberteil 11 abgestützt, wodurch die Elemente mit notwendiger Spannung auch bei verschiedenen Materialstärken der Folie gehalten sind. In der Zeichnung ist zwar das Bezugszeichen 15 für die Druckverteilungsleisten angegeben, diese sind aber in der Zeichnung nicht dargestellt, sondern sie sind an den mit 15 angegebenen Elementen befestigt. Vorzugsweise sind die Druckverteilerleisten quer zur Einschubrichtung nachgiebig federnd angeordnet.

In an sich bekannter Weise weist eine solche Vorrichtung auch eine Wärmequelle zur Erwärmung der in Sollposition befindlichen Tiefziehfolie auf, wobei vorzugsweise mehrere Wärmequellen, insbesondere vorzugsweise eine Wärmequelle oberhalb eines jeden Modellablageplatzes 2 angeordnet ist.

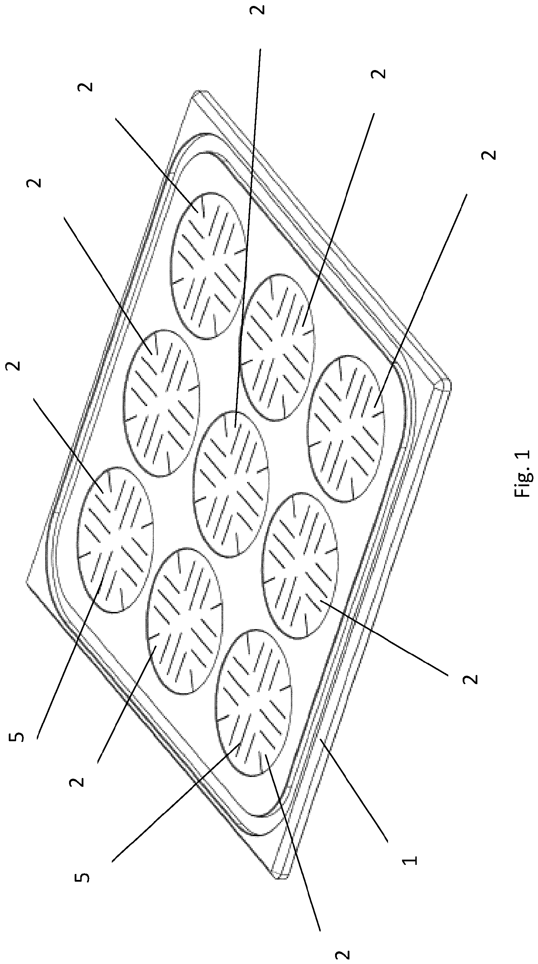

Wie insbesondere in Figur 1 ersichtlich, sind die Modellablageplätze 2 auf der Modellplatte 1 in mehreren Reihen und Spalten angeordnet und ausgebildet.

Die Erfindung ermöglicht es in einfacher Weise gleichzeitig mehrere Schienen durch Tiefziehen auf mehreren Modellen zu fertigen. Nach Beendigung des Tiefziehvorganges kann die Folienkassette 10 entnommen werden und samt Tiefziehfolie und daran befindlichen Modellen gehandhabt werden, wobei die Tiefziehfolie entnommen werden kann und die Schienen samt Modell aus der Folie ausgetrennt werden können.

Die Erfindung ist nicht auf das Ausführungsbeispiel beschränkt, sondern im Rahmen der Offenbarung vielfach variabel.

## Patentansprüche

1. Vorrichtung zur Herstellung von für dentale Zwecke bestimmten Teilen, insbesondere mundgetragenen Schienen für bezahnte Ober- oder Unterkiefer, mittels Tiefziehen, wobei ein Modell in die Vorrichtung eingelegt, auf das Modell eine Tiefziehfolie aufgelegt und mittels eines Vakuumerzeugers zu einer Schiene tiefgezogen wird, wobei die Vorrichtung eine Modellplatte (1) aufweist, auf der mehrere Modellablageplätze (2) ausgebildet sind, jeder Modellablageplatz (2) unterseitig gegenüber dem Platz zur Anordnung eines Modells einen Anschluss (8) an den Vakuumerzeuger (3) aufweist, wobei oberhalb der Modellplatte (1) eine Ablage für eine Tiefziehfolie angeordnet ist, die alle Modellablageplätze überdeckt und die vorzugsweise in eine Handhabungsposition mit Abstand von den Modellablageplätzen verstellbar ist sowie in eine Arbeitslage, in der sie auf die auf den Modellablageplätzen befindlichen Modelle absenkbar ist und die luftdicht mindestens am umlaufenden Rand der Modellplatte (1) aufliegt, **dadurch gekennzeichnet, dass** der Anschluss (8) über Verbindungskanäle oder -schlitze (5) an der Oberseite des jeweiligen Modellablageplatzes (2) offen ausmündet und, dass der Vakuumerzeuger (3) mit den Verbindungskanälen oder -schlitzen (5) über Schläuche (6) verbunden ist, wobei alle Schläuche (6) die gleiche Länge und den gleichen Querschnitt oder Durchmesser aufweisen.

2. Vorrichtung nach Anspruch 1, **dadurch gekennzeichnet, dass** die Ablage für die Tiefziehfolie durch eine Folienkassette (10) mit einem rahmenartigen Oberteil (11) und einem rahmenartigen Unterteil (12) gebildet ist, wobei das Oberteil (11) relativ zum Unterteil (12) in eine Handhabungsposition verstellbar ist, in der eine Tiefziehfolie zwängungsfrei zwischen Ober- und Unterteil (11,12) einlegbar ist, des Weiteren in einer Zwischenposition die Tiefziehfolie zwischen Ober- und Unterteil (11,12) eingespannt hält und in dieser Zwischenposition in ein Einschubteil (14) der Folienkassette (10) einschiebbar oder eingeschoben ist, in dem das Oberteil (11) samt Tiefziehfolie und Unterteil (12) in gespanntem Zustand in Arbeitslage gehalten ist.

3. Vorrichtung nach Anspruch 2, **dadurch gekennzeichnet, dass** das Einschubteil der Folienkassette (10) parallel zur Einschubrichtung des aus Oberteil (11), Tiefziehfolie und Unterteil (12) bestehenden Paketes randseitig sich am Rand des Oberteils (11) abstützende Druckverteilerleisten (15) aufweist.

4. Vorrichtung nach Anspruch 3, **dadurch gekennzeichnet, dass** die Druckverteilerleisten (15) quer zur Einschubrichtung federnd nachgiebig angeordnet sind.

5. Vorrichtung nach einem der Ansprüche 1 bis 4, **dadurch gekennzeichnet, dass** die Vorrichtung eine Wärmequelle zur Erwärmung der Tiefziehfolie aufweist, vorzugsweise jeweils eine Wärmequelle oberhalb eines jeden Modellablageplatzes (2).

6. Vorrichtung nach einem der Ansprüche 1 bis 5, **dadurch gekennzeichnet, dass** die Modellablageplätze (2) auf der Modellplatte (1) in mehreren Reihen und Spalten ausgebildet sind.

## Claims

1. A device for producing parts intended for dental purposes, in particular rails worn in the mouth for tooth-bearing upper or lower jaws, by thermoforming, a model being inserted into the device, a thermoforming sheet being placed onto the model and being thermoformed into a rail by means of a vacuum generator, the device comprising a model plate (1), whereupon several model set-down areas (2) are formed, each model set-down area (2) comprising, on the bottom portion opposite to the area for arranging a model, a connection (8) to the vacuum generator (3), above the model plate (1), a set-down area for a thermoforming sheet being disposed that covers all model set-down areas and that preferably is adjustable into a handling position spaced apart from the model set-down areas and into a working position, where it can be lowered onto the models located on the model set-down areas, and that is supported in an air-tight manner at least at the circumferential edge of the model plate (1), **characterized by that** the connection (8) terminates in an open manner via connection channels or slots (5) at the top portion of the respective model set-down area (2), and that the vacuum generator (3) is connected to the connection channels or slots (5) through tubes (6), all tubes (6) having the same lengths and the same cross-sections or diameters.

2. The device of claim 1, **characterized by that** the set-down area for the thermoforming sheet is formed by a sheet cassette (10) having a frame-like top portion (11) and a frame-like bottom portion (12), the top portion (11) being adjustable relative to the bottom portion (12) into a handling position, in which a thermoforming sheet can be inserted freely between the top and bottom portions (11, 12), further holds, in an intermediate position, the thermoforming sheet clamped between the top and bottom portions (11, 12), and in this intermediate position, is insertable or inserted into a slide-in portion (14) of the sheet cassette (10), in said slide-in portion (14) the top portion (11) together with the thermoforming sheet and the bottom portion (12) being held in a tensioned condition in the working position.

3. The device of claim 2, **characterized by that** the slide-in portion of the sheet cassette (10) comprises at its edge, in parallel to the slide-in direction of the package consisting of top portion (11), thermoforming sheet, and bottom portion (12), pressure distribution ridges (15) supported at the edge of the top portion (11).

4. The device of claim 3, **characterized by that** the pressure distribution ridges (15) are disposed transversely to the slide-in direction in a resiliently movable manner.

5. The device of one of claims 1 to 4, **characterized by that** the device comprises a heat source for heating the thermoforming sheet, preferably one heat source above each model set-down area (2).

6. The device of one of claims 1 to 5, **characterized by that** the model set-down areas (2) are provided on the model plate (1) in several rows and columns.

## Revendications

1. Dispositif de fabrication de pièces destinées à des fins dentaires, en particulier des gouttières portées dans la bouche pour des mâchoires supérieures ou inférieures, par thermoformage, un modèle étant inséré dans le dispositif, une feuille de thermoformage étant positionnée sur le modèle et étant thermoformée en une gouttière au moyen d'un générateur de vide, le dispositif comprenant une plaque de modèle (1), sur laquelle plusieurs positions de rangement du modèle (2) sont réalisées, chaque position de rangement du modèle (2) comprenant, sur la partie inférieure opposée à la position pour arranger un modèle, une liaison (8) au générateur de vide (3), au-dessus de la plaque de modèle (1), une surface de dépose pour une feuille de thermoformage étant disposée qui recouvre toutes les positions de rangement du modèle et qui est de préférence réglable en une position de manutention espacée des positions de rangement du modèle et en une position de travail, où elle est apte à descendre sur les modèles se trouvant aux positions de rangement des modèles, et qu'elle est en appui de façon étanche à l'air au moins sur le bord circonférentiel de la plaque de modèle (1), **caractérisé en ce que** la liaison (8) débouche de façon ouverte par l'intermédiaire de canaux ou fentes de liaison (5) à la partie supérieure de la position de rangement du modèle (2) respective, et que le générateur de vide (3) est lié aux canaux ou fentes de liaison (5) à travers de tuyaux (6), tous les tubes (6) ayant une longueur identique et une section en coupe ou un diamètre identique.

2. Dispositif selon la revendication 1, **caractérisé en ce que** la surface de dépose pour la feuille de thermoformage est réalisée par une cassette de feuille (10) ayant une partie supérieure (11) en forme de cadre et une partie inférieure (12) en forme de cadre, la partie supérieure (11) étant réglable par rapport à la partie inférieure (12) en une position de manutention, dans laquelle une feuille de thermoformage peut être insérée librement entre la partie supérieure et la partie inférieure (11, 12), en outre maintient, dans une position intermédiaire, la feuille de thermoformage clampée entre la partie supérieure et la partie inférieure (11, 12), et dans cette position intermédiaire est insérable ou insérée dans une partie tiroir (14) de la cassette de feuille (10), dans cette partie tiroir (14) la partie supérieure (11) ensemble avec la feuille de thermoformage et la partie inférieure (12) étant maintenue en un état de tension dans la position de travail.

3. Dispositif selon la revendication 2, **caractérisé en ce que** la partie tiroir de la cassette de feuille (10) comprend à son bord, en parallèle à la direction d'insertion du paquet consistant en la partie supérieure (11), la feuille de thermoformage et la partie inférieure (12), des lames de distribution de pression (15) en appui contre le bord de la partie supérieure (11).

4. Dispositif selon la revendication 3, **caractérisé en ce que** les lames de distribution de pression (15) sont disposées transversalement à la direction d'insertion de façon élastiquement souple.

5. Dispositif selon une des revendications 1 à 4, **caractérisé en ce que** le dispositif comprend une source de chaleur pour chauffer la feuille de thermoformage, de préférence une source de chaleur au-dessus de chacune position de rangement du modèle (2).

6. Dispositif selon une des revendications 1 à 5, **caractérisé en ce que** les positions de rangement du modèle (2) sont prévues sur la plaque de modèle (1) en plusieurs lignes et colonnes.
